# EUROPEAN PATENT APPLICATION

(11) **EP 2 175 511 A1**
(43) Date of publication of application: **14.04.2010**
(21) Application number: 08790777.0
(22) Date of filing: 01.07.2008
(51) Int. Cl.: H01M 8/04, H01M 8/00, H04M 1/725

(54) **ELECTRONIC DEVICE**

(30) Priority: 06.07.2007 JP 2007178981
(71) Applicant: Kabushiki Kaisha Toshiba, Minato-ku Tokyo 105-8001 (JP)
(72) Inventor: AOKI, Risa c/o Toshiba Corporation I.P.D, 105-8001 Tokyo (JP); YAJIMA, Akira c/o Toshiba Corporation I.P.D, 105-8001 Tokyo (JP); SATOH, Asako c/o Toshiba Corporation I.P.D, 105-8001 Tokyo (JP); MOMMA, Jun c/o Toshiba Corporation I.P.D, 105-8001 Tokyo (JP); TAKIZAWA, Yumiko c/o Toshiba Corporation I.P.D, 105-8001 Tokyo (JP); SATO, Yuuichi c/o Toshiba Corporation I.P.D, 105-8001 Tokyo (JP); OOMICHI, Genta c/o Toshiba Corporation I.P.D, 105-8001 Tokyo (JP); KAN, Hirofumi c/o Toshiba Corporation I.P.D, 105-8001 Tokyo (JP); NEGISHI, Nobuyasu c/o Toshiba Corporation I.P.D, 105-8001 Tokyo (JP); FURUICHI, Mitsuru c/o Toshiba Corporation I.P.D, 105-8001 Tokyo (JP); YOSHIDA, Yuichi c/o Toshiba Corporation I.P.D, 105-8001 Tokyo (JP); YODA, Kiyoto c/o Toshiba Corporation I.P.D, 105-8001 Tokyo (JP); OOTA, Hideo c/o Toshiba Corporation I.P.D, 105-8001 Tokyo (JP)
(74) Representative: Henkel, Feiler & Hänzel
(86) International application number: PCT/JP2008/061914
(87) International publication number: WO 2009/008290

(57) **Abstract**

In an electronic device, state detection elements are arranged at various locations of a fuel cell system 6 which supplies an electric power to a phone unit 1, wherein the state detection elements detect states of a fuel cell system 6 at the various locations. A cell state detection unit 101a detects an operating state of the fuel cell from an output signal of each of the state detection elements. A determination unit 101b determines an operating mode to prompt action to be taken for the operating state of the fuel cell detected by the cell state detection unit 101a. A content of the operating mode is displayed with an image of a character or a fictitious creature based on a determination by the determination unit. Thus, there can be provided an electronic device capable of using a fuel cell for a long time with stability in which the fuel cell whose longer life is realized is used.

## Description

### Technical Field

The present invention relates to an electronic device provided with a fuel cell as a power supply.

### Background Art

Various electronic devices such as digital cameras have been known as electronic devices that use a dry cell or a secondary cell as a power supply. It is necessary for such electronic devices to replace the cell at an appropriate time or charge the cell when a cell capacity declines because lower cell capacity could affect device operations. If this timing is wrong, there is a problem that the device itself may become unusable.

Thus, electronic devices are known that detect a remaining capacity of the cell serving as a power supply and, if the detected remaining capacity falls to a predetermined value or below, makes a notification of sound, display, or the like to prompt replacement or charging of the cell. As disclosed in, for example, Jpn. Pat. Appln. KOKAI Publication No. 2000-236458, there are electronic devices that present the display in accordance with the remaining capacity of the cell to a display screen to cause the display screen to display a special character to prompt replacement or charging of the cell if the detected remaining capacity falls to a predetermined value or below.

Incidentally, in recent years, reduction in size of electronic devices such as mobile phones and personal digital assistants (PDA) is remarkable and an attempt is made to use a fuel cell as a power supply, in addition to reduction in size of these electronic devices. The fuel cell can advantageously generate an electric power only by supplying fuel and oxidizer to a generation unit and can also continue to generate an electric power only by replacing fuel. Thus, if the size thereof can be reduced, the fuel cell will be extremely useful as a power supply of small electronic devices.

In recent years, the direct methanol fuel cell (DMFC) has attracted much attention as a fuel cell. The DMFC has an electrolytic membrane arranged between an anode electrode and a cathode electrode and the anode electrode and the cathode electrode are each constructed of a current collector and a catalyst layer. A methanol solution is supplied to the anode electrode as fuel and protons are generated by a catalytic reaction. On the other hand, air as an oxidizer is supplied to the cathode electrode (air electrode) through an air intake. An electric power is generated on the cathode electrode by protons after penetrating through the electrolytic membrane being reacted with oxygen contained in the supplied air on a catalyst to generate electrons. Thus, the DMFC uses methanol with high energy density as fuel, a current can directly be extracted from methanol on the electrode catalyst, reduction in size thereof is possible because reforming is not needed, and fuel can be handled more easily than a hydrogen gas and therefore, the DMFC is considered to be promising as a power supply of portable electronic devices.

However, in an electronic device in which the fuel cell is used as a power supply, even if the aforementioned function to simply indicate the remaining capacity of the cell by an index, that is, the function to make a notification of the remaining capacity of the cell by sound or display, or the function to cause a display screen to display a character screen is applied, the user cannot replace or charge the cell and is only allowed, instead of replacement or charging of the cell, to supply fuel according to the notification or display.

The fuel cell actually mounted in an electronic device is used in various ways and may sometimes be used under conditions harsh for the fuel cell or in ways that cause problems. When used under such conditions or in such ways, nothing that could prompt behavior suppressing usage of the device in accordance with the state of the cell has been considered and thus, there is a problem that, when compared with usage under suitable conditions, it is difficult to use the fuel cell for a long time with stability, making the cell life shorter.

### Disclosure of Invention

An object of the present invention is to provide an electronic device capable of using a fuel cell for a long time with stability in which the fuel cell whose longer life is realized is used.

According to a first aspect of the invention defined in claim 1, there is provided an electronic device comprising:
an electronic unit;
a fuel cell that supplies electric power to the electronic unit;
state detection elements that are arranged at various locations of the fuel cell and detect states of the fuel cell at the various locations;
a cell state detection unit that detects an operating state of the fuel cell from an output signal of each of the state detection elements;
a determination unit that determines an operating mode to prompt action to be taken for the operating state of the fuel cell detected by the cell state detection unit; and
a notification unit that makes a notification of content of the operating mode based on a determination by the determination unit.

According to a second aspect of the invention defined in claim 2, there is provided an electronic device according to claim 1, wherein the state detection unit includes at least one of a liquid amount detection unit that detects a present liquid amount of liquid fuel supplied to a liquid fuel tank configuring the fuel cell, a temperature detection unit that detects a temperature of a membrane electrode assembly configuring the fuel cell, a pressure detection unit that detects change in internal pressure of a fuel vaporization layer configuring the fuel cell, an output detection unit that detects an output signal from the fuel cell, and a temperature detection unit that detects the temperature around the fuel cell.

According to a third aspect of the invention defined in claim 3, there is provided an electronic device according to claim 1, wherein the notification unit displays the content determined by the determination unit with an image of a character or a fictitious creature.

According to a fourth aspect of the invention defined in claim 4, there is provided an electronic device according to claim 3, wherein the notification unit makes a notification of at least one of sound, imitative sound, vibration, and light, together with an image display of the character or the fictitious creature.

According to a fifth aspect of the invention defined in claim 6, there is provided an electronic device according to claim 1, wherein the notification unit makes a notification of at least one of sound, imitative sound, vibration, and light.

According to a sixth aspect of the invention defined in claim 6, there is provided an electronic device according to claim 1, further comprising a storage unit that stores detected information detected by the state detection elements,
wherein the determination unit uses the detected information stored in the storage unit as parameters to determine the operating mode of the notification of current conditions of the fuel cell as deterioration over time or cell life from changes of the parameters, and
the notification unit displays the content of the determination by the determination unit with an image of a character or a fictitious creature.

### Brief Description of Drawings

FIG. 1 is a block diagram schematically showing an electronic device according to a first embodiment of the present invention.
FIG. 2 is a block diagram schematically showing a fuel cell system used in the electronic device shown in FIG. 1.
FIG. 3 is a sectional view schematically showing a fuel cell incorporated into the fuel cell system shown in FIG. 2.
FIG. 4A is a schematic view showing a display example displayed in a display unit of the electronic device shown in PIG. 1.
FIG. 4B is a schematic view showing another display example displayed in the display unit of the electronic device shown in FIG. 1.
FIG. 4C is a schematic view showing still another display example displayed in the display unit of the electronic device shown in FIG. 1.
FIG. 4D is a schematic view showing yet another display example displayed in the display unit of the electronic device shown in FIG. 1.
FIG. 5A is a diagram showing another display example displayed in the display unit of the electronic device shown in FIG. 1.
FIG. 5B is a diagram showing another display example displayed in the display unit of the electronic device shown in FIG. 1.
FIG. 5C is a diagram showing another display example displayed in the display unit of the electronic device shown in FIG. 1.
FIG. 6A is a diagram showing another display example displayed in the display unit of the electronic device shown in FIG. 1.
FIG. 6B is a diagram showing another display example displayed in the display unit of the electronic device shown in FIG. 1.
FIG. 6C is a diagram showing another display example displayed in the display unit of the electronic device shown in FIG. 1.
FIG. 6D is a diagram showing another display example displayed in the display unit of the electronic device shown in FTG. 1.

### Best Mode for Carrying Out the Invention

An electronic device according to an embodiment of the present invention will be described below with reference to the drawings.

### (First embodiment)

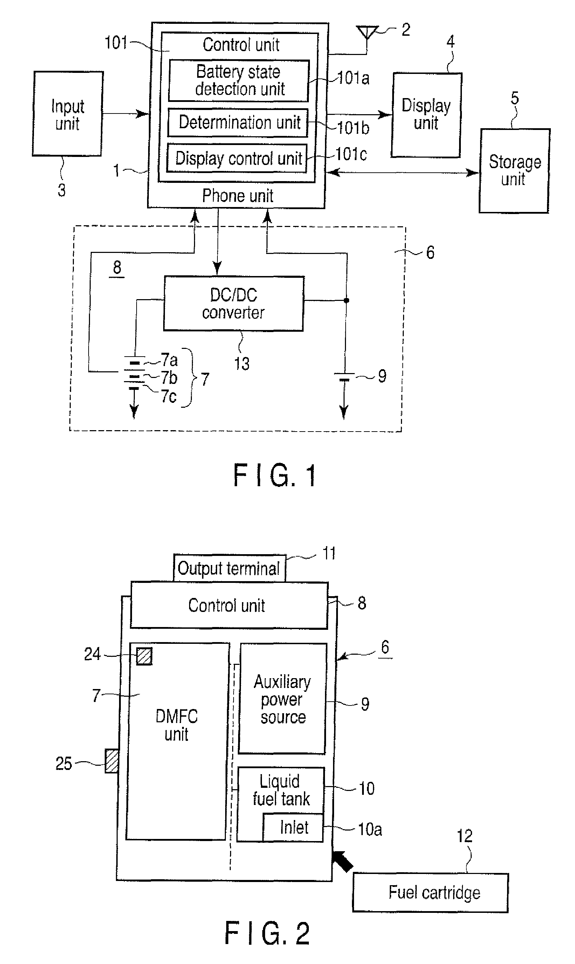

FIG. 1 shows an outline configuration of an electronic device according to the first embodiment of the present invention. Here, FIG. 1 shows an example of a mobile phone as an electronic device.

In FIG. 1, reference numeral 1 shows a phone unit, which is an electronic unit. The phone unit or phone device 1 is capable of transmitting and receiving a radio wave having a frequency corresponding to a specified channel and converts a sound signal input from a microphone (not shown) into a high-frequency signal to output the high-frequency signal from an antenna 2 and also converts the high-frequency signal input to the antenna 2 into a sound signal to output the sound signal from a speaker (not shown). An input unit 3, a display unit 4, and a storage unit 5 are connected to the phone unit 1. The input unit 3 comprises a plurality of push switches and inputs operation signals of these push switches into the phone unit 1. A liquid crystal display unit or the like is used as the display unit 4 to display various kinds of information. The storage unit 5 has, for example, image data of a character imitating a person or an animal or a fictitious creature and control data to control motion of the character or fictitious creature stored therein.

The phone unit 1 comprises a control unit 101. The control unit 101 controls the whole phone unit 1 and comprises a cell state detection unit 101a, a determination unit 101b, and a display control unit 101c. The cell state detection unit 101a detects the cell state from output signals from state detection elements arranged at various locations in a fuel cell system 6 described later. The determination unit 101b determines the operating mode to prompt action to be taken by the user concerning the cell state detected by the cell state detection unit 101a. The display control unit 101c reads image data of a character (or a fictitious creature) and control data from the storage unit 5 to cause the display unit 4 to display the image data based on content of the operating mode determined by the determination unit 101b. Details of the cell state detection unit 101a, the determination unit 101b, and the display control unit 101c will be described later.

The fuel cell system 6 is provided in a power supply chamber (not shown) of the phone unit 1 described above as a fuel cell.

FIG. 2 shows an outline configuration of the fuel cell system 6 shown in FIG. 1 and a DMFC unit 7 as a fuel cell, a control unit 8, an auxiliary power supply 9, a liquid fuel tank 10, and an output terminal 11 are provided.

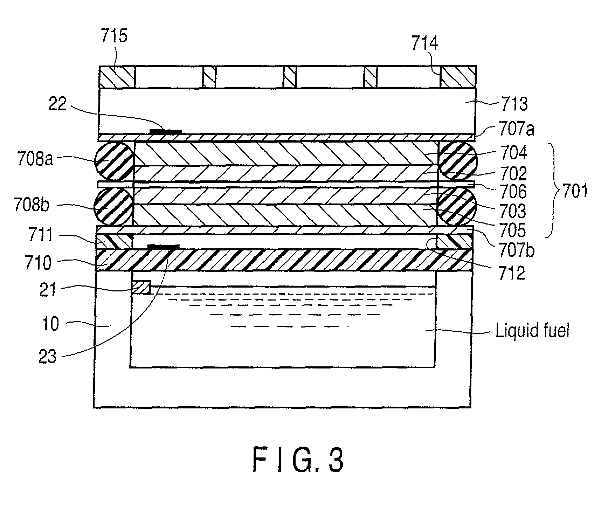

The DMFC unit 7 comprises, as shown in FIG. 1, a plurality of generating cells 7a, 7b, and 7c. These generating cells 7a, 7b, and 7c each comprise, as shown in FIG. 3, a membrane electrode assembly (MEA) 701. The membrane electrode assembly (MEA) 701 comprises a cathode electrode comprising a cathode catalyst layer 702 and a cathode gas diffusion layer 704, an anode electrode comprising an anode catalyst layer 703 and an anode gas diffusion layer 705, and a proton-conducting electrolytic membrane 706 arranged between the cathode catalyst layer 702 and the anode catalyst layer 703. Catalysts contained in the cathode catalyst layer 702 and the anode catalyst layer 703 include, for example, metals of platinum group elements (such as Pt, Ru, Rh, Ir, Os, and Pd) and alloys containing platinum group elements. It is desirable to use Pt-Ru resistant to methanol or carbon monoxide as the anode catalyst and platinum as the cathode catalyst, but catalysts are not limited to such examples. Proton-conducting materials configuring the proton-conducting electrolytic membrane 706 include, for example, a fluoric resin having a sulfonic group (for example, perfluoro sulfonate polymer), hydrocarbonic resin having a sulfonic group, and inorganic substance such as tungstic acid and phosphotungstic acid, but proton-conducting materials are not limited to such examples.

The cathode catalyst layer 702 is laminated on top of the cathode gas diffusion layer 704 and the anode catalyst layer 703 on top of the anode gas diffusion layer 705. The cathode gas diffusion layer 704 has a function to uniformly supply an oxidizer to the cathode catalyst layer 702 and also serves as a current collector that collects electrons generated in the cathode catalyst layer 702. The anode gas diffusion layer 705, on the other hand, has a function to uniformly supply fuel to the anode catalyst layer 703 and also serves as a current collector that collects electrons generated in the anode catalyst layer 703. A cathode conductive layer 707a and an anode conductive layer 707b are in contact with the cathode gas diffusion layer 704 and the anode gas diffusion layer 705, respectively. A porous layer (for example, a mesh) made of metallic material such as gold can be used in each of the cathode conductive layer 707a and the anode conductive layer 707b.

A cathode seal material 708a in a rectangular frame shape is positioned between the cathode conductive layer 707a and the proton-conducting electrolytic membrane 706 and also encloses the cathode catalyst layer 702 and the cathode gas diffusion layer 704. An anode seal material 708b in a rectangular frame shape, on the other hand, is positioned between the anode conductive layer 707b and the proton-conducting electrolytic membrane 706 and also encloses the anode catalyst layer 703 and the anode gas diffusion layer 705. The cathode seal material 708a and the anode seal material 708b are O rings to prevent fuel leakage and oxidizer leakage from the MEA 701.

The aforementioned liquid fuel tank 10 is arranged below the MEA 701. Liquid methanol or a methanol solution is contained in the liquid fuel tank 10. For example, a gas liquid separation membrane 710a that allows only vaporization components of liquid fuel to transmit and does not allow the liquid fuel to transmit is arranged so as to cover an opening of the liquid fuel tank 10 as a fuel vaporization layer 710 at an opening end of the liquid fuel tank 10. Here, vaporization components of liquid fuel mean vaporized methanol when liquid methanol is used as liquid fuel and a mixed gas including essentially of vaporization components of methanol and those of water when a methanol solution is used as liquid fuel. It is preferable to use a methanol solution whose concentrations are more than 50 mol% or pure methanol as liquid fuel. The degree of purity of pure methanol is preferably 95 wt% or more and 100 wt% or less.

Frames 711 made of resin are laminated between the gas liquid separation membrane 710a and the anode conductive layer 707b. A space enclosed by the frames 711 functions as a vaporized fuel containing chamber 712 (a so-called steam pocket) that temporarily contains vaporized fuel diffused by the gas liquid separation membrane 710a. Due to the vaporized fuel containing chamber 712 and a transmitted methanol amount control effect of the gas liquid separation membrane 710a, a large amount of vaporized fuel can be prevented from being supplied to the anode catalyst layer 703 at a time so that an occurrence of methanol crossover can be suppressed. The frames 711 are rectangular frames and are formed from thermoplastic polyester resin like, for example, polyester terephthalate (PET).

On top of the cathode conductive layer 707a laminated on top of the membrane electrode assembly 701, on the other hand, a moisture retention plate 713 is laminated. The moisture retention plate 713 is provided to promote a reaction in which water generated in the cathode catalyst layer 702 moves to the anode catalyst layer 703 by passing through the proton-conducting electrolytic membrane 706. A surface layer 715 in which a plurality of air inlets 714 to take in air acting as an oxidizer is formed is laminated on top of the moisture retention plate 713. The surface layer 715 also serves to enhance adhesiveness of a stack by applying pressure to the stack including the membrane electrode assembly 701 and thus is made of metal like SUS304. The moisture retention plate 713 serves not only to suppress transpiration of water generated in the cathode catalyst layer 702, but also as an auxiliary diffusion layer that promotes uniform diffusion of the oxidizer to the cathode catalyst layer 702 by uniformly introducing the oxidizer to the cathode gas diffusion layer 704.

As shown in FIG. 2, the DMFC unit 7 is connected to the liquid fuel tank 10 via a fuel supply channel (not shown) so that fuel in the liquid fuel tank 10 is supplied to the DMFC unit 7 through the fuel supply channel. The liquid fuel tank 10 is provided with an inlet 10a. A fuel cartridge 12 is removably mounted in the inlet 10a and fuel is poured into the liquid fuel tank 10 by the fuel cartridge 12.

Liquid fuel contained in the liquid fuel tank 10 is not necessarily limited to methanol fuel and may be, for example, ethanol fuel such as an ethanol solution and pure ethanol, propanol fuel such as a propanol solution and pure propanol, glycol fuel such as a glycol solution and pure glycol, dimethyl ether, formic acid, or other liquid fuel. In any case, liquid fuel in accordance with the fuel cell is contained.

In the fuel cell system 6 having the above structure, various kinds of state detection elements to detect the cell state are arranged at various locations. As shown in FIG. 3, a level gauge 21 is provided in each of the generating cells 7a, 7b, and 7c as a liquid amount detection unit that detects the present liquid amount of liquid fuel inside the liquid fuel tank 10. The level gauge 21 detects the height of liquid surface of the liquid fuel supplied to the liquid fuel tank 10 and generates output in accordance with the height of liquid surface- Also, a temperature sensor 22 is provided in the aforementioned membrane electrode assembly (MEA) 701. The temperature sensor 22 comprises a thermocouple or the like and detects the temperature of the membrane electrode assembly 701 inside the cell and generates output in accordance with the detected temperature. Further, a pressure sensor 23 is provided in the fuel vaporization layer 710 inside the cell. The pressure sensor 23 comprises a deformation sensor or the like and is stuck on the surface of, for example, the fuel vaporization layer 710 to detect the state of the fuel vaporization layer 710 deformed with rising pressure inside the cell and to generate output in accordance with the degree of deformation. Further, as shown in FIG. 2, an output meter 24 is provided in the DMFC unit 7. The output meter 24 detects output of the DMFC unit 7, that is, the total output of each of the generating cells 7a, 7b, and 7c. Further, a temperature sensor 25 is provided around the fuel cell system 6. The temperature sensor 25 detects the temperature around the fuel cell system 6 (or the temperature inside the phone containing the fuel cell system 6) and generates output in accordance with the detected temperature. More specifically, the temperature sensor 25 detects the temperature inside the phone containing the fuel cell system 6 and generates output in accordance with the detected temperature.

The control unit 8 is configured by a control circuit as shown in FIG. 1. In the system shown in FIG. 1, the DMFC unit 7 generates predetermined output by connecting a plurality of, for example, three generating cells 7a, 7b, and 7c in series.

A booster-type DC-DC converter 13 is connected to the DMFC unit 7 as an output adjustment unit. The DC-DC converter 13 configures a generation unit together with the DMFC unit 7, comprises a switching component (not shown) and an energy storage component, causes the switching component and the energy storage component to store/discharge electric energy generated by the DMFC unit 7, and supplies the generated electric power to the phone unit 1 via the output terminal 11 by boosting a relatively low voltage of the DMFC unit 7 to a sufficiently high voltage.

The standard booster-type DC-DC converter 13 is illustrated here, but any other circuit system capable of performing a boosting operation can be embodied.

The aforementioned auxiliary power supply 9 is connected to an output end of the DC-DC converter 13 and also the phone unit 1 is connected thereto. The auxiliary power supply 9 is made chargeable by output of the DC-DC converter 13 so that a current is supplied to instantaneous load fluctuations of the phone unit 1 and is used as a driving power supply of the phone unit 1 when the DMFC unit 7 becomes incapable of generating an electric power due to a fuel depletion state. A chargeable and dischargeable secondary cell (for example, a lithium ion cell (LIB) or an electric double layer capacitor) is used as the auxiliary power supply 9.

On the other hand, output signals from state detection elements, that is, the level gauge 21, the temperature sensor 22, the pressure sensor 23, the output meter 24, and the temperature sensor 25 arranged at various locations in the fuel cell system 6 are sent to the control unit 101.

In the control unit 101, the operating state of the fuel cell system 6 is detected by the cell state detection unit 101a from output signals of each of the level gauge 21, the temperature sensor 22, the pressure sensor 23, the output meter 24, and the temperature sensor 25 and the determination unit 101b determines, as described below, the operating mode to prompt action that should be taken by the user concerning the operating state of the fuel cell system 6 detected by the cell state detection unit 101a.
(a) If the cell state detection unit 101a detects that the height of liquid surface of the liquid fuel in the liquid fuel tank 10 has fallen to a preset lower limit or less, the operating mode to prompt refueling is determined by assuming that the remaining amount of fuel has diminished. Here, each output signal from the temperature sensor 22, the pressure sensor 23, the output meter 24, and the temperature sensor 25 may be any value in the detection of liquid surface and does not affect the determination of refueling.
(b) If the cell state detection unit 101a detects that an output signal from the power output meter 24 is a preset lower limit or less and the decreasing rate thereof is a certain constant value or more, the operating mode to prompt improvement of the operating environment or necessity to temporarily stop electric power generation or the like is determined by recognizing that the fuel cell system 6 is in a blocked environment or the like in which it is expected that a shortage of oxygen necessary for reaction will be caused. Here, in the detection of the cell state, output signals of the level gauge 21 and the temperature sensor 25 are assumed to be proper values between preset upper and lower limits and output signals from the temperature sensor 22 and the pressure sensor 23 may be any values and do not affect the determination of the cell state.
(c) If the cell state detection unit 101a detects that an output signal from the temperature sensor 25 has fallen to a preset lower limit or less, the operating mode to prompt fuel supply, movement of the operating environment or the like is determined by assuming that there are signs that maintaining the DMFC unit 7 in a certain state will be impossible or the DMFC unit 7 is in a state that makes it impossible to maintain the DMFC unit 7 in a certain state. Here, when the fact that an output signal from the temperature sensor 25 has fallen to a preset lower limit or less is detected, an output signal from the level gauge 21 is assumed to be a proper value and output from the output meter 24, the temperature sensor 22 and the pressure sensor 23 may be any values.
(d) If the cell state detection unit 101a detects that an output signal from the output meter 24 is more than a preset lower limit and an output signal from the temperature sensor 22 is more than a preset upper limit, the operating mode to prompt temporary interruption of cell usage or improvement of operation such as reduction in load for the cell is determined by assuming that the interior of the cell will be continuously in a high temperature state. Here, when the fact that an output signal from the output meter 24 is more than a preset lower limit and an output signal from the temperature sensor 22 is more than a preset upper limit is detected, output values from the level gauge 21 and the temperature sensor 25 are assumed to be proper values and an output value from the pressure sensor 23 may be any value.
(e) If the cell state detection unit 101a detects that an output signal from the temperature sensor 25 has risen to a preset upper limit or more, the operating mode to prompt improvement of the operating environment is determined by assuming that the temperature around the fuel cell system 6 is in a state of extremely high temperature as a cell operating environment. Here, when the fact that an output signal from the temperature sensor 25 has risen to a preset upper limit or more is detected, an output signal from the level gauge 21 is assumed to be a proper value and output signals from the output meter 24, the temperature sensor 22 and the pressure sensor 23 may be any values.
(f) If the cell state detection unit 101a detects that an output signal from the level gauge 21 is a proper value, but fluctuates extremely or continuously wildly, the operating mode to prompt change of the operating environment is determined by assuming that the level gauge 21 is in an extraordinary state for normal use. That is, for example, when a whole mobile phone is put into an operating environment that promotes the degradation of electric power generation and an electric power generation system like swaying the whole mobile phone violently, the operating mode to prompt the stop of such an operation is determined. Here, when the fact that an output value from the level gauge 21 is a proper value, but fluctuates extremely or continuously wildly is detected, output signals from the temperature sensor 25, the output meter 24, the temperature sensor 22 and the pressure sensor 23 may be any values.
(g) If the cell state detection unit 101a detects that an output signal from the level gauge 21 has risen to a preset upper limit or more, the operating mode to prevent supply of fuel to prevent further supply of fuel is determined by assuming that the fuel cell system 6 is in a supply state of excessive fuel. Here, when the fact that an output value from the level gauge 21 has risen to a preset upper limit or more is detected, output signals from the temperature sensor 25, the output meter 24, the temperature sensor 22 and the pressure sensor 23 may be any values.
(h) If the cell state detection unit 101a detects that an output signal from the output meter 24 is a preset lower limit or less and the decreasing rate thereof has fallen to less than a constant value, the operating mode to prompt a temporary stop of use and reduction of water in the fuel chamber is determined by assuming that the reduction in output of the DMFC unit 7 is continuous and the cause therefor is other than a reduced amount of fuel. That is, if the possibility of the function being obstructed due to an excessive amount of water inside the liquid fuel tank 10 or the cell is determined, the operating mode to prompt a temporary stop of use and drying is determined. Here, when the fact that an output signal from the output meter 24 is a preset lower limit or less and the decreasing rate thereof has fallen to less than a constant value is detected, output from the level gauge 21 and the temperature sensor 25 is assumed to be proper values and output signals from the temperature sensor 22 and the pressure sensor 23 may be any values.
(i) If the cell state detection unit 101a detects that an output signal from the output meter 24 is more than a preset lower limit, output from the temperature sensor 22 is a preset upper limit or less, and output from the pressure sensor 23 is more than a preset upper limit, the operating mode to prompt the user to change operating conditions is determined by assuming that an excessive rise in pressure has occurred inside the cell and a certain level or more of deformation has occurred in the fuel vaporization layer 710. That is, for example, the operating mode to prompt the user to change operating conditions is determined to prevent excessive supply of fuel or the fuel vaporization layer 710 from being too swollen due to a rise in pressure inside the cell caused by a high temperature in the operating environment. Here, when the fact that an output signal from the output meter 24 is more than a preset lower limit, output from the temperature sensor 22 is a preset upper limit or less, and output from the pressure sensor 23 is more than a preset upper limit is detected, output from the level gauge 21 and the temperature sensor 25 is assumed to be proper values.

The display control unit 101c reads image data such as a corresponding character (or a fictitious creature) and control data from the storage unit 5 based on content of each operating mode determined by the determination unit 101b to cause the display unit 4 to display the character. Concrete display examples of these will be described later.

Next, operations of an electronic device according to an embodiment configured as described above will be described.

If the fuel cell system 6 is currently in a generation state in which fuel is supplied to the DMFC unit 7 from the liquid fuel tank 10, output from the DMFC unit 7 is boosted by the DC-DC converter 13 to supply electric power to the phone unit 1. The auxiliary power supply 9 is charged by output of the DC-DC converter 13. Thus, the phone unit 1 is brought into a state in which phone calls or mails can be used by using electric power supplied from the DC-DC converter 13 as a power supply.

In this state, output from state detection elements, that is, the level gauge 21, the temperature sensor 22, the pressure sensor 23, the output meter 24, and the temperature sensor 25 arranged at various locations in the fuel cell system 6 is sent to the control unit 101 for continuous monitoring of the cell state.

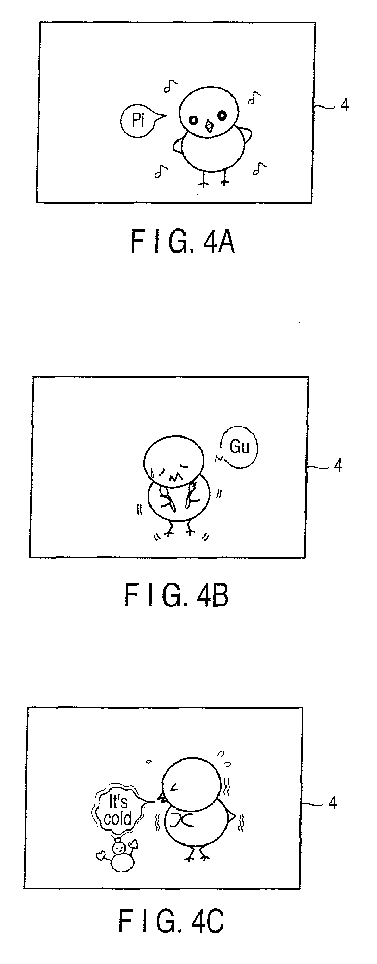

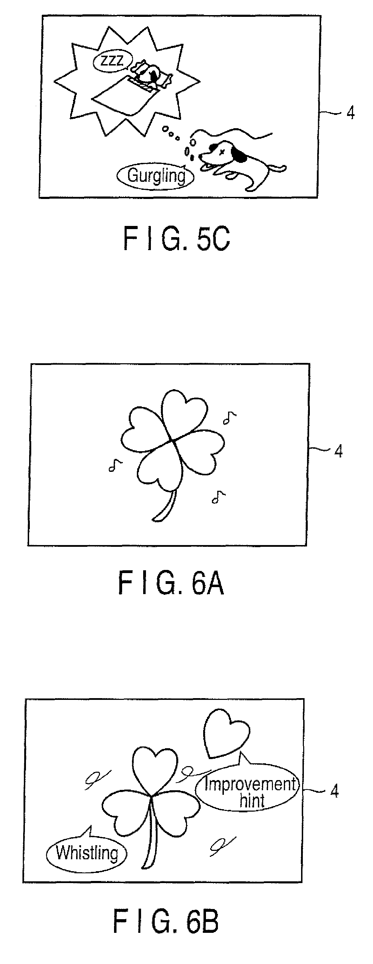

If output signals from each of the level gauge 21, the temperature sensor 22, the pressure sensor 23, the output meter 24, and the temperature sensor 25 are normal in this monitoring so that the fuel cell system 6 is determined to be in a proper environment, for example, as shown in FIG. 4A, the display unit 4 is caused to display a character imitating an animal in a good humor. In the case of a fictitious creature imitating a plant, for example, as shown in FIG. 6A, the display unit 4 is caused to display a four-leaf clover in a vivid state.

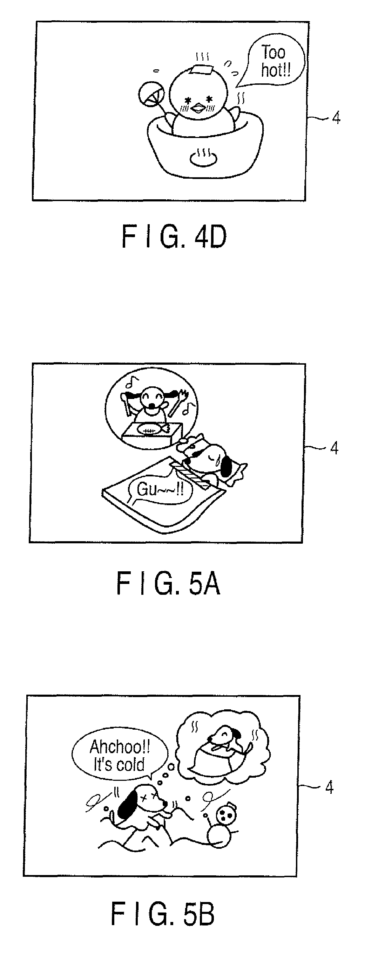

If, on the other hand, the cell state detection unit 101a detects that the height of liquid surface of the liquid fuel in the liquid fuel tank 10 has fallen to a preset lower limit or less, the determination unit 101b determines the operating mode to prompt refueling by assuming that the remaining amount of fuel has diminished (the above determination (a)). In this determination, each output value of the temperature sensor 22, the pressure sensor 23, the output meter 24, and the temperature sensor 25 may be any value. Accordingly, the display control unit 101c reads image data such as a character (or a fictitious creature) and control data from the storage unit 5 based on content of each operating mode determined by the determination unit 101b to cause the display unit 4 to display the character. For example, as shown in FIG. 4B, supply of fuel is prompted by causing the display unit 4 to display an image in which a character imitating an animal complains of hunger and asks for feed and, as shown in FIG. 5A, supply of fuel is prompted by causing the display unit 4 to display an image in which a character imitating an animal dreams of meals. For a fictitious creature imitating a plant, for example, as shown in FIG. 6B, the display unit 4 is caused to display undesirable circumstances by a three-leaf clover, though not imminent. In addition, the display unit 4 may be caused to display an image asking the user to supply fuel in the operating mode of prompting watering by showing a fictitious creature imitating a plant drooping, sagging, starting to wither or the like.

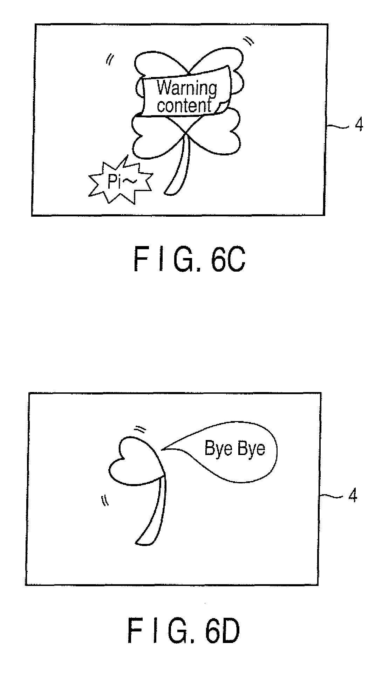

If the cell state detection unit 101a detects that an output signal from the output meter 24 is a preset lower limit and the decreasing rate thereof is a certain constant value or more, the determination unit 101b determines the operating mode to prompt improvement of the operating environment or necessity to temporarily stop electric power generation or the like by recognizing that the fuel cell system 6 is in a blocked environment or the like in which a shortage of oxygen necessary for reaction could be caused (the above determination (b)). Here, in this determination, output signals of the level gauge 21 and the temperature sensor 25 are assumed to be proper values and output signals from the temperature sensor 22 and the pressure sensor 23 may be any values. Based on this determination, the display control unit 101c causes the display unit 4 to display an image that prompts inappropriate usage conditions, as an example, after being put into an environment in which supply of oxygen is prevented to the utmost, to be led to conditions in which oxygen is sufficiently supplied. As a more concrete example, for a character imitating an animal, improvement of the operating environment is prompted by asking for oxygen with a representation of slight suffocation by being put into an environment in which oxygen concentrations necessary for cell reaction are not secured sufficiently at the bottom of a bag or the like. For a fictitious creature imitating a plant, for example, as shown in FIG. 6C, the display unit 4 is caused to display fluttering two-leaf clovers with warning content. In addition, there is a display example in which a fictitious creature imitating a plant complains of insufficient breathing by being dried up or starting to wither to ask the user to move the usage environment to a place where oxygen concentrations are secured to a certain extent. As another example, the display unit 4 is caused to display an image with content similar to the above one when movement to a place where carbon dioxide concentrations are higher or improvement of the usage environment is asked when used in an environment in which air is rarely let in.

If the cell state detection unit 101a detects that an output signal from the temperature sensor 25 has fallen to a preset lower limit or less, the determination unit 101b determines the operating mode to prompt fuel supply, movement of the operating environment or the like (the above determination (c)). Here, in this determination, an output signal from the level gauge 21 is assumed to be a proper value and output values from the output meter 24, the temperature sensor 22 and the pressure sensor 23 may be any values. Based on this determination, the display control unit 101c assumes that the cause is the drop of temperature and causes the display unit 4 to display, for example, as shown in FIG. 4C, an image in which a character imitating an animal complains of the cold or shivers from the cold or causes the display unit 4 to display, for example, as shown in FIG. 5B, an image in which a character imitating an animal wants to warm itself in the cold to prompt supply of fuel or movement of the operating environment to a higher temperature. For a fictitious creature imitating a plant, the display unit 4 may be caused to display an image asking for improvement of the usage environment such as freezing.

If the cell state detection unit 101a detects that an output signal from the output meter 24 is more than a preset lower limit and an output signal from the temperature sensor 22 is more than a preset upper limit, the determination unit 101b determines the operating mode to prompt temporary interruption of cell usage or improvement of operation such as reduction in load for the cell by assuming that the interior of the cell will be continuously in a high temperature state (the above determination (d)). In this determination, output values from the level gauge 21 and the temperature sensor 25 are assumed to be proper values and an output value from the pressure sensor 23 may be any value. Based on this determination, the display control unit 101c assumes that, for example, the cause is too high a temperature due to electric power generation or the like and prompts a temporary stop of excessive operations with an image in which a character imitating an animal catches cold, has a fever, or wants ice cream or causes the display unit 4 to display an image in which a fictitious creature imitating a plant changes in color after being burnt to prompt temporary reduction or stop of operation.

If the cell state detection unit 101a detects that an output signal from the temperature sensor 25 has risen to a preset upper limit or more, the determination unit 101b determines the operating mode to prompt improvement of the operating environment (the above determination (e)). In this determination, an output signal from the level gauge 21 is assumed to be a proper value and output signals from the output meter 24, the temperature sensor 22 and the pressure sensor 23 are assumed to be any values. Based on this determination, the display control unit 101c assumes that the cause is too high a temperature of the operating environment and causes the display unit 4 to display, for example, as shown in FIG. 4D, an image in which a character imitating an animal has too hot a bath and complains of it to prompt improvement of the operating state or interruption thereof. Naturally, an image in which a character imitating an animal complains of heat under a burning sun, gets sunburned, or wants to enter a refrigerator may also be adopted or, for a fictitious creature imitating a plant, the display unit 4 may be caused to display an image in which the fictitious creature dries up and withers to prompt change, improvement, or interruption of the operating state.

If the cell state detection unit 101a detects that an output signal from the level gauge 21 is a proper value, but fluctuates extremely or continuously wildly, the determination unit 101b determines the operating mode to prompt change of the operating environment by assuming that the level gauge 21 is in an extraordinary state for normal use. That is, when a whole mobile phone is put into an operating environment that promotes the degradation of electric power generation and an electric power generation system like swaying the whole mobile phone violently, the operating mode to prompt the stop of such an operation is determined (the above determination (f)). In this determination, output signals from the temperature sensor 25, the output meter 24, the temperature sensor 22 and the pressure sensor 23 may be any values. Based on this determination, the display control unit 101c prompts the stop of an inappropriate operating environment by an image in which a character imitating an animal is scared, gets angry, or screams. For a fictitious creature imitating a plant, for example, as shown in FIG. 6D, the display unit 4 is caused to display an image in which one-leaf clover shakes its head to ask for the stop of usage operation.

If the cell state detection unit 101a detects that an output signal from the level gauge 21 has risen to a preset upper limit or more, the determination unit 101b determines the operating mode to prevent supply of fuel to prevent excessive supply of fuel by assuming that the fuel cell system 6 is in a supply state of excessive fuel (the above determination (g)). In this determination, output signals from the temperature sensor 25, the output meter 24, the temperature sensor 22 and the pressure sensor 23 may be any values. Based on this determination, the display control unit 101c prompts prevention of excessive supply of fuel when the user further tries to supply fuel in a state in which fuel is sufficiently supplied with an image in which a character imitating an animal complains of being full or vomits, or causes the display unit 4 to display an image in which a fictitious creature imitating a plant puts up an umbrella against watering to ask for the stop of oversupply of fuel.

If the cell state detection unit 201a detects that an output signal from the output meter 24 is a preset lower limit or less and the decreasing rate thereof has fallen to less than a constant value, the determination unit 101b determines the operating mode to prompt a temporary stop of use and reduction of water in the fuel chamber by assuming that the reduction of output signal from the DMFC unit 7 is continuous and the cause therefor is other than a reduced amount of fuel. That is, if circumstances that admit the possibility of reaching a state in which the function is obstructed due to an excessive amount of water inside the liquid fuel tank 10 or the cell are determined, the operating mode to prompt a temporary stop of use and drying before such a state is reached is determined (the above determination (h)). In this determination, output signals from the level gauge 21 and the temperature sensor 25 are assumed to be proper values and output signals from the temperature sensor 22 and the pressure sensor 23 may be any values. Based on this determination, when the return of reflux water becomes excessively high or concentrations of water in the tank are too high, the display control unit 101c causes the display unit 4 to display an image in which a character imitating an animal is drowned or pounded by rain or, for example, as shown in FIG. 5C, an image in which a character imitating an animal wants to rest in water to prompt the user to temporarily stop usage or to move the usage location to a dry environment. For a fictitious creature imitating a plant, the display control unit 101c causes the display unit 4 to display an image that prompts the user to temporarily change the usage or drying, for example, by withstanding floods caused by heavy rains for the purpose of drying reflux water or temporarily stopping generation of generated water by stopping usage.

If the cell state detection unit 101a detects that an output signal from the output meter 24 is more than a preset lower limit, an output signal from the temperature sensor 22 is a preset upper limit or less, and an output signal from the pressure sensor 23 is more than a preset upper limit, the determination unit 101b determines the operating mode to prompt the user to change operating conditions in accordance with the degree of deformation by assuming that an excessive rise in pressure has occurred inside the cell and a certain level or more of deformation has occurred in the fuel vaporization layer 710. That is, for example, the operating mode to prompt the user to change operating conditions is determined to prevent excessive supply of fuel or the fuel vaporization layer 710 from being too swollen due to a rise in pressure inside the cell caused by a high temperature in the operating environment (the above determination (i)). In this determination, output signals from the level gauge 21 and the temperature sensor 25 are assumed to be proper values. Based on this determination, the display control unit 101c causes the display unit 4 to display an image in which a character imitating an animal gets sick to suffer from mumps or a fictitious creature asks for temperature control due to too high a room temperature to prompt the user to temporarily stop an operation or lower the internal temperature.

If no improvement whatever is produced after the image display by the display unit 4 in accordance with any of the determinations (a) to (i), the next operation such as the termination of operation of the fuel cell may forcibly be executed.

In a mobile phone in which the fuel cell is used as a power supply, as described above, various kinds of state detection elements to detect the cell state, more specifically, the level gauge 21 to detect the height of liquid surface of the liquid fuel supplied to the liquid fuel tank 10, the temperature sensor 22 to detect the temperature of the membrane electrode assembly 701 inside the cell, the pressure sensor 23 to detect the state of the fuel vaporization layer 710 deformed with rising pressure inside the cell, the output meter 24 to detect output voltages of each of the generating cells 7a, 7b, and 7c as output of the DMFC unit 7, and the temperature sensor 25 to detect the temperature around the fuel cell system 6, are provided at various locations in the fuel cell system 6. The current operating state of the fuel cell system 6 is detected from output signals of these state detection elements, the operating mode to prompt action to be taken by the user for the detected operating state is determined, and the user is prompted to facilitate appropriate usage conditions of the fuel cell by an image of a character or a fictitious creature being displayed in the display unit 4 according to the determination. Thus, the user knows the cell state from the display screen of a character or a fictitious creature displayed in the display unit 4 and can suppress usage of the electronic device according to the display content. If the fuel cell system 6 should be used under harsh conditions or in ways that cause problems, such a state can be resolved swiftly so that the fuel cell system 6 can be used for a long time with stability, realizing a longer life of the cell.

Moreover, by displaying content prompting action to be taken by the user for the cell state using an image of a character or a fictitious creature, the user can focus on the display content with interest so that swift action by the user can be expected.

### (Second embodiment)

In the first embodiment, the display unit 4 is caused to display content of the operating mode prompting action to be taken by the user using an image of a character or a fictitious creature based on the state of the fuel cell system 6 detected by various kinds of state detection elements arranged at various locations of the fuel cell. In the second embodiment, by contrast, output detected by various kinds of state detection elements is stored and the display unit 4 is caused to display the current cell state using an image of a character or a fictitious creature based on storage content.

In the second embodiment, the storage unit 5 shown in FIG. 1 further has a function to store detected information of each of the level gauge 21, the temperature sensor 22, the pressure sensor 23, the output meter 24, and the temperature sensor 25, which are state detection elements arranged at various locations in the fuel cell system 6. Moreover, the control unit 101 uses each piece of detected information stored in the storage unit 5 by the determination unit 101b as a parameter, determines the current cell state, for example, deterioration over time or life of the cell from changes of these parameters, and reads character data and control data from the storage unit 5 based on the determination content to cause the display unit 4 to display an image of a character or a fictitious creature. Otherwise, the second embodiment is the same as the first embodiment.

In the determination based on detected information stored in the storage unit 5, detected information of each of various kinds of state detection elements, that is, the level gauge 21, the temperature sensor 22, the pressure sensor 23, the output meter 24, and the temperature sensor 25 arranged at various locations in the fuel cell system 6 is successively stored in the storage unit 5. Storage content of the storage unit 5 is read, for example, at fixed periods and sent to the control unit 101. The control unit 101 uses each piece of detected information stored in the storage unit 5 by the determination unit 101b as a parameter and determines the operating mode in which the current cell state, for example, deterioration over time or life of the cell from changes of these parameters is communicated. Based on this determination, the display control unit 101c reads image data of a character or a fictitious creature, control data and the like from the storage unit 5 based on content of the operating mode determined by the determination unit 101b and causes the display unit 4 to display the image. Concrete examples of the display include a display of a character imitating an animal that notifies the user of guidelines of deterioration over time, life and the like of the cell with an image of growing older or the like and that of a fictitious creature imitating a plant that notifies the user of deterioration over time due to the accumulated time of cell with an image in which a flower is caused to blossom or fruit is borne.

Therefore, the user can know in this manner deterioration over time, life and the like of the cell as guidelines from the screen of a character, a fictitious creature or the like displayed in the display unit 4. Thus, by actively avoiding using the fuel cell system 6 under conditions harsh for the system or ways of using the system that cause problems in accordance with the display at that time, the fuel cell system 6 can be used for a still longer time with stability, realizing a still longer life of the cell.

By replacing the whole cell in accordance with display content at that time, the fuel cell system 6 can always be used in a stable state, making it possible to prevent circumstances in which the device is disabled due to a cell problem.

The present invention is not limited to the above embodiments and the embodiments can be modified in various ways in working stages without departing from the scope thereof. In each of the above embodiments, for example, an image of a character or a fictitious creature is displayed in the display unit 4 as a notification unit, but together with the display of such an image, for example, sound, imitative sound, light or the like may also be used. In such a case, if a plurality of types of different sounds is prepared as sounds or imitative sounds by associating with determination content by the determination unit 101b, details of the cell state can be communicated only by the sound. Alternatively, vibration of a vibrator or the like may also be used together. By using such a vibration, the cell state can reliably be communicated to the user even when the device is in a bag or pocket. Naturally, the sound, imitative sound, vibration and light can be used alone. Further, determination content by the determination unit 101b may be displayed in the display unit 4 using letters or symbols together with an image of a character or a fictitious creature.

In the above embodiments, the level gauge 21, the temperature sensor 22, the pressure sensor 23, the output meter 24, and the temperature sensor 25 are described as state detection elements arranged at various locations in the fuel cell system 6, but these are only an example and other state detection elements may also be arranged at various locations in the fuel cell system 6. In short, it is possible to use any state detection unit arranged at various locations in the fuel cell system 6 to allow detection of the current state of the fuel cell based on an output signal thereof to determine the operating mode to be taken by the user for the detected cell state and to make a notification of content of the determination by using an image such as a character or a fictitious creature, sound, imitative, sound, vibration, light or the like.

In the above embodiments, the operating state of the fuel cell system 6 is detected from output signals of individual state detection elements, but the current state of the fuel cell system 6 may be determined from a combination of output signals of a plurality of state detection elements so that a notification is made by using an image of a character or a fictitious creature, sound, vibration, or light.

Further, in the above embodiments, a case where the electronic device is a mobile phone has been described, but the present invention can also be applied to other small electronic devices such as a mobile audio device. In this case, while an electronic device (mobile phone) comprising a display unit and into which a fuel cell system is incorporated has been described in the above embodiments, the present invention can be applied to an electronic device provided with a display unit independently of the electronic device or an electronic device provided with a fuel cell system independently of the electronic device.

Further, in the above embodiments, inventions in various stages are contained and various inventions can be extracted by an appropriate combination of a plurality of disclosed constituent features. For example, as long as subjects described in Disclosure of Invention can be solved and effects described in Advantages of the Invention are gained even if some constituent features are deleted from all constituent features shown in the embodiment, the configuration after some constituent features being deleted can be extracted as an invention. In the above description, for example, an example of a passive fuel cell is mainly taken as a component of the DMFC unit 7, but the present invention can be applied to an active fuel cell and further, a semi-passive fuel cell partially using a pump in fuel supply or the like and the same operation effects as those when the passive fuel cell is used can be gained.

### Industrial Applicability

According to the present invention, there can be provided an electronic device capable of using a fuel cell for a long time with stability in which the fuel cell whose longer life is realized is used.

## Claims

1. An electronic device comprising:
an electronic unit;
a fuel cell that supplies electric power to the electronic unit;
state detection elements that are arranged at various locations of the fuel cell and detect states of the fuel cell at the various locations;
a cell state detection unit that detects an operating state of the fuel cell from an output signal of each of the state detection elements;
a determination unit that determines an operating mode to prompt action to be taken for the operating state of the fuel cell detected by the cell state detection unit; and
a notification unit that makes a notification of content of the operating mode based on a determination by the determination unit.

2. The electronic device according to claim 1, wherein the state detection unit includes at least one of a liquid amount detection unit that detects a present liquid amount of liquid fuel supplied to a liquid fuel tank configuring the fuel cell, a temperature detection unit that detects a temperature of a membrane electrode assembly configuring the fuel cell, a pressure detection unit that detects change in internal pressure of a fuel vaporization layer configuring the fuel cell, an output detection unit that detects an output signal from the fuel cell, and a temperature detection unit that detects the temperature around the fuel cell.

3. The electronic device according to claim 1, wherein the notification unit displays the content determined by the determination unit with an image of a character or a fictitious creature.

4. The electronic device according to claim 3, wherein the notification unit makes a notification of at least one of sound, imitative sound, vibration, and light, together with an image display of the character or the fictitious creature.

5. The electronic device according to claim 1, wherein the notification unit makes a notification of at least one of sound, imitative sound, vibration, and light.

6. The electronic device according to claim 1, further comprising a storage unit that stores detected information detected by the state detection elements,
wherein the determination unit uses the detected information stored in the storage unit as parameters to determine the operating mode of the notification of current conditions of the fuel cell as deterioration over time or cell life from changes of the parameters, and
the notification unit displays the content of the determination by the determination unit with an image of a character or a fictitious creature.
